# EUROPEAN PATENT SPECIFICATION

(11) **EP 0 895 509 B1**
(45) Date of publication and mention of the grant of the patent: **21.08.2002**
(21) Application number: 96912202.7
(22) Date of filing: 22.04.1996
(51) Int. Cl.: C03B 9/38, C03B 9/353, C03B 9/347, B23P 15/24, B29C 33/38, B29C 33/04

(54) **MOULD COOLING DEVICE IN THE GLASS MAKING INDUSTRY, RELEVANT MOULD MACHINING PROCESS AND FITNESS PROCESS OF SAID COOLING DEVICE IN DIFFERENT MOULDS FOR CHANGING THE PRODUCTION FROM A GLASS CONTAINER TO ANOTHER**
FORMKÜHLVORRICHTUNG FÜR DIE GLASINDUSTRIE UND VERFAHREN ZUM HERSTELLEN UND ANPASSEN DIESER KÜHLVORRICHTUNG AN VERSCHIEDENEN FORMEN
DISPOSITIF DE REFROIDISSEMENT DE MOULE UTILISE DANS L'INDUSTRIE DE LA FABRICATION DU VERRE, PROCEDE D'USINAGE DE MOULE CORRESPONDANT ET PROCEDE D'ADAPTATION DE CE DISPOSITIF DE REFROIDISSEMENT A DIFFERENTS MOULES POUR PASSER DE LA PRODUCTION D'UN RECIPIENT DE VERRE A UN AUTRE

(43) Date of publication of application: 10.02.1999
(73) Proprietor: Aziende Vetrarie Industriali Ricciardi-Avir S.p.A., 20094 Corsico (Milano) (IT)
(72) Inventor: MORETTIN, Ambrogio, I-30020 Cinto Cao Maggiore (IT)
(74) Representative: Gustorf, Gerhard, Dipl.-Ing.
(86) International application number: IT9600080
(87) International publication number: WO97039989

(56) References cited:
- EP-A- 0 141 288
- WO-A-87/05551
- FR-A- 2 103 648
- GB-A- 2 256 868
- US-A- 3 586 491
- US-A- 4 750 929

## Description

The invention relates to a mould cooling system for a mould in a glass container making machine, a method of machining a mould to adapt it to this mould cooling system and a method for adapting said mould cooling system to different types of glass containers as set forth in the preambles of claims 1, 4, 5 and 6.

One of the most critical problems in the hollow glass making industry is made by the cooling process both of blank and blow moulds, because several aspects, which regard quality and quantity consequences of glass production, depend on them.

Indeed, it is well known that, if the cooling process is not obtained according to an actually uniform way along the extension of, at first, the parison, and, then, of the finished product (i.e. in the blank and in the blow mould), the risk can rise not only to extend, beyond economically suitable reasons, the time required by the production cycle, but also to reach a too high percentage of scraps.

Said scraps are mostly due to cracks, which are caused by a not uniform, and therefore critical, distribution of an internal stress within the walls of the finished product.

Indeed, the glass gob, which falls into the blank mould, meets with a first obstruction on the internal mould wall, in correspondence of its portion, where the parison body is tapering to the neck. Said mould portion gets warmer than the other portions and, consequently, it spoils and wears out more than the other internal walls of the mould.Indeed, the glass gob overheats the portion of the internal wall, which it meets and causes the removal of the detaching film from this portion of the internal mould wall, whereby the gob sticks to said wall portion and causes its consequent spoiling.

A known cooling device provides a plurality of conducts, which are internally and axially arranged with respect to the extension of the blank and blow moulds. The cooling air is adapted to unidirectionally flow along said conducts. In the blank moulds the chamber, which is fed by the compressed air and which is feeding the cooling conducts, is situated close to the mould head, which the gob is inserted through, whereas in the blow moulds the chamber, which is fed by the compressed air, is situated in correspondence of the mould bottom. The air, after cooling the mould, leaves from the opposite direction of the mould.

Consequently, the cooling process starts involving in both of moulds, at first the bottom respectively of the parison and of the bottle, then their intermediate portions and at last their necks; therefore the finished product is cooled in a not uniform way, whereby an internal stress rises, which makes the bottles crack and causes their scraps.

It is to be pointed out that, as far as the bottle forming process is concerned, it is dangerous to cool, especially in the blow moulds, at first and more intensively the bottle bottom rather than the other portions of the bottle.

Indeed it is well known that an excessive cooling process of the bottle bottom emphasizes the thermic unbalance and causes an internal stress in correspondence of the joint between the bottom and the vertical walls of the mould, to the prejudice of the seal of the bottle.

A further device, which was developed after the previously described device, provides a splitting of the internal cooling conducts into an upper and a lower portion of the conducts. They are fed by air, which comes from an annular recess. Said recess is substantially concentric with reference to the axial extension of the mould and is placed substantially in the middle of the axial extension of the mould.

The cooling air, starting from here, is directed towards the upper and the lower portion of the mould. Said device is adapted to improve the homogeneous cooling process of the mould in its different portions, whereas the previously described device makes cool more the upper portion of the blank mould and the lower portion of the blow mould with respect to the opposite portions of the moulds. In addition said device presents a further drawback, relating to the high costs, which are required by substitution of the most old equipments (moulds and mould-holders, which belonged to the previous technological solutions, relating both to moulds with axial cooling conducts and to moulds without any cooling conducts). Consequently, the introduction of the splitted conducts, which are to be axially obtained for the cooling process of the moulds, requires high investments and the solution of many, not only economical, difficulties, whenever the plants should be updated according to the modern technologies.

A further problem of technological kind should be added to the economical and financial difficulties, which were just described: indeed, it often happens that an equipment, which is manufacturing bottles of a certain shape and of a certain dimension, should change from the production of certain bottles to the production of different bottles. As the change should be made in a quite quick way, the minimum replacement of toolings is required (such a requirement can be satisfied just if the operating tools can be used again thanks to small traverses and changes).

For instance, the change of production can regard a dimensional change, especially in axial terms, of a bottle. In such a case, the change of blank and blow moulds, as well as the axial (with reference to the mould) replacement of the compressed air chamber are required, said chamber being adapted to feed the axial conducts of the mould with cooling air.

With reference to a parison or to a finished bottle, where the axial extension of the neck is substantially narrow with respect to the body extension, the compressed air chamber and, therefore, the corresponding mould room, which the conducts of cooling air are derived from, can be placed in a substantially middle axial position of the mould, whereas, if the shape of the parison and of the finished bottle presents an axial neck extension, which is substantial with respect to the bottle body, the compressed air chamber and the corresponding mould room, which the conducts of cooling air are derived from, should be placed in an axial position, which is substantially close respectively to the parison- and to the bottle-bottom. Therefore it is apparent that a change of production can require the replacement of the mould, of the compressed air chamber, of the relevant holders, and so on. Total times, which are substantially long, are required by the equipment replacements. The total costs, which are due to the investment in complete and specific equipment for each kind of bottles to be produced, are substantial, too.

A problem, which the system according to the invention intends to solve is to allow to use, as much as possible, the operating equipment, reducing to a minimum the relevant investment, whenever a plant for the production of glass containers (starting from a plant with externally cooled moulds or with moulds, which are cooled by unidirectional axial conducts) should be provided with moulds, which are cooled by splitted axial conducts, so that the cooling air is blown starting from a substantially middle position with regard to the axial extension of the mould. Such a result could be obviously obtained, if simple machinings are provided, for instance drill and mill machinings, which can obtain the internal conducts and the annular recess connected to the compressed air chamber.

A further aim to join the previous one, concerns the possibility to make the production change of bottle in substantially quick times, reducing to a minimum the replacement of equipments, which are necessary for reaching such a production change.

The described problems are solved by the system and methods according to the independent claims.

The invention will be apparent from the following description and from the attached drawings, wherein:
Fig.1 represents a perspective view of an opened mould, which is made of two couples of blank mould halves;
Fig.2 represents a perspective view of a closed blank mould, which isimade of two couples of blank mould halves;
Fig.3 represents a perspective view of the equipment to be applied to a double blank mold,i.e. to a blank mould, which is made of two couples of mould halves;
Fig.4 represents a partial perspective view of a cooling device, which is applied to a double blank mould, where just one mould half is present;
Fig.5 represents a perspective view of a mould half in a blank mould;
Fig.6 represents a plan view of a detail of the device according to the invention.

The system according to the invention is adapted to be applied, with the same substantial rules, to the blank and to the blow moulds in the glass making industry.

The present embodiment is dealing just with the cooling device, which can be applied to the blank moulds, but it is to be pointed out that the same cooling device can be automatically extended to the blow moulds, whereby the relevant description is getting shorter and more simple by limiting it to the blank moulds.

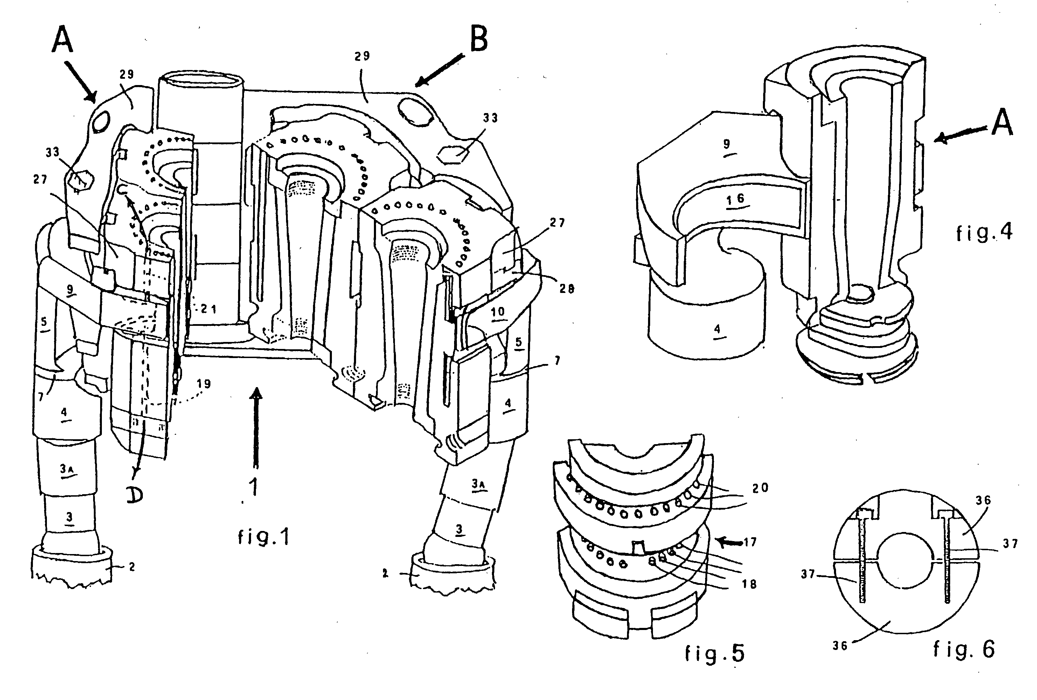

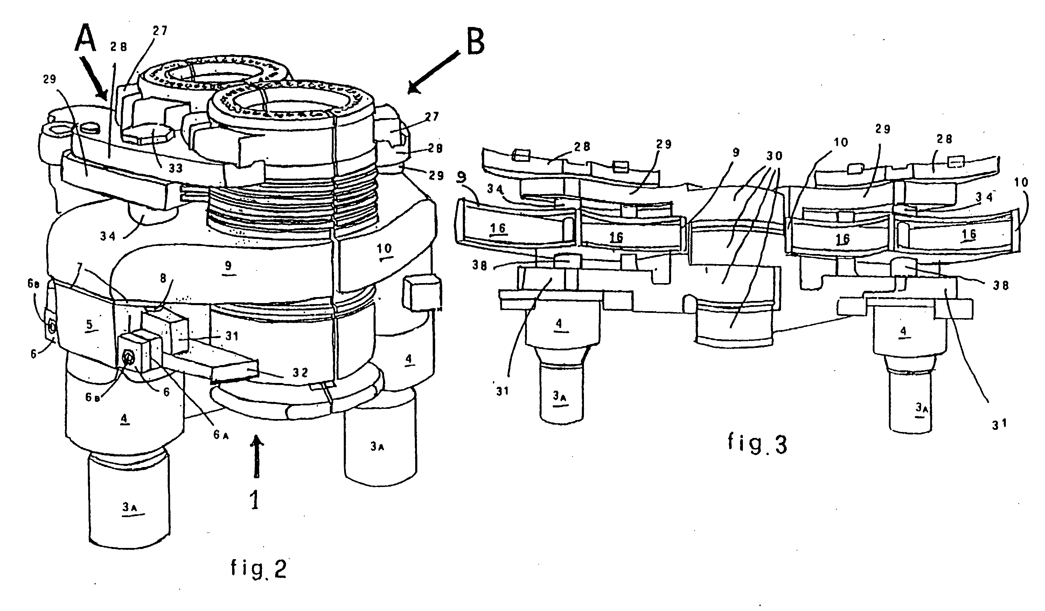

On the basis of this limitation of description, but not of application, the device according to the invention comprises two air pipes, which are adapted to feed two double mould halves A and B. A blank mould 1 (Fig.1) is made of these mould halves A and B. Said air pipes comprise an element 2, which is connected, in a way known per se, to a device for the production of compressed air, which is not represented in the drawings. A relevant articulated joint as well as a telescopic joint are not represented in the drawings, too. The element 2 comprises also a telescopic joint 3-3a (Figs.1,2,3), which is connected, by means of an articulated joint known per se, to a tubular element 4.

This latter is adapted to telescopically slide inside the rectangul seat, not represented in the drawings, of a block 5 (Figs.1,2), which is integrally connected to two side elements 6 (Fig.2). Said elements present a cut along a transverse line 6a, in order to allow a loosening or a locking, thanks to two screws 6b, of the tubular element 4 on the block 5. All this in order to allow, as it will be apparent later on, an adjustment along the height of the cooling device in the blank and blow moulds for manufacturing different kinds of bottles, which can differ each one from the others not only in their shapes, but especially in their axial extension.

The upper portion of block 5 presents a flange 7, which is screwed by means of two screws 8 (just one of them is represented in Fig.2) to a shell half 9.This latter, as well as a further shell half 10, represents the compressed air chamber of the device according to the invention, which is applied to the blank mould 1.

As far as the blank mould 1 is represented in detail in Fig.4 (which shows just a mould half A), the compressed air chamber, which is made of the shell half 9, is just represented on the. left side of said blank mould. Indeed, this mould is a double blank mould, which is made of two mould halves A, which two mould halves B should correspond to.

Mould halves A and B are represented in Fig.1. The shell half 9 presents a recess 16 (Figs.3,4), which is adapted to co-operate with an annular recess 17 of the blank mould 1 (Fig.5). The recess 17 is provided with a plurality of holes 18, which extend downwards into conducts 19 (Fig.1) and holes 20, which extend upwards into conducts 21.

The cooling air, which is blown from shell halves 9,10 into the recess 17 of blank mould 1, is splitted in two portions the first one of which, represented in Fig.1 by an arrow C, is directed upwards, and the other one, which is represented by an arrow D, is directed downwards.

The blank mould 1 (in the same way as the blow mould not represented in the drawings) presents upwards a shoulder 27 (Figs.1,2), which an upper mould-holer insert 28 is adapted to co-operate with. This latter is then controlled by a hinge-arm 29 (see also Fig.3). In the lower part a hinge-arm 31 (Fig.2) is supported by a lower mould-holder insert 32. The hinge-arms 29,31 are connected, each one to the other, by means of a hinge-system 30. A through bolt 33 (Fig.2) crosses the insert 28, the hinge-arm 29, the shell half 9, the lower hinge arm 31 and the lower insert 32. At last, it ends into a screwed seat (not represented in the drawings), which is obtained in the tubular element 4.

A spacer 34 (Figs.2,3) is placed between the hinge-arm 29 and the shell half 9, which is made of two half disks 36 (Fig.6). These latter can be coupled, as it will be apparent later on, by means of two screws 37, in order to enclose the bolt 33. Likewise a spacer 38 (Fig.3) is placed between the shell half 9 and the lower hinge-arm 31, in the same way as the spacer 34.

As it will be explained later on, whenever the shell halves 9,10 of the blank mould 1 and of the blow mould (which is not represented in the drawings), should be adjusted to the axial extension of a new mould, the new optimal frontal position of the relevant shell halves 9,10 with respect to the annular recess 17 (Fig.5) of the mould, is found by a suitable selection of the axial size of the spacer 34,38. These latter are provided with some different heights, which are just depending on the axial extension of the mould and of the optimal positioning of the shell halves 9,10 (which represent the compressed air chamber for feeding the conducts 19,21). Therefore the spacers 34,38 represent the height adjusting means of compressed air chamber 9,10 with respect to the corresponding annular recess 17 of the mould 1.

The described mould cooling system is operating as follows: after deciding which kind of glass container is to be produced, the relevant mould 1, which should be used, is selected and arranged on the equipment of Fig.3, having care to place the shoulder 27 of the mould 1 on the insert 28. Meanwhile the spacers 34,38 of the equipment 3 are selected, taking into account the requirement to place the chamber 9.10 in correspondence with the annular recess 17 of the mould 1.

The main advantage of the device according to the invention with respect to known similar device, is that the described device is providing a total disengagement of the chamber 9,10 from the mould 1. Indeed the mould 1 is resting, i.e. is applied, with the shoulder 27 on the insert 28, with the consequence that the mould 1 is quite independent of the equipment of Fig.3.

The consequent advantage is represented by the fact that, whenever a mould should be replaced with another one, due to the change of the container to be produced, the so-called "cage" (the arms 29,31, the upper insert 28 and the lower insert 32) is disengaged from the mould 1, which can be therefore replaced by another mould for the production of a different container, with the advantage that a drawback is avoided: the necessity to change the whole equipment whenever the production of a container is changed.

It is apparent that the system according to the invention allows a substantial reduction of the equipment investment due to the introduction of the internal bi-directional cooling process, where the cooling air is blown from a middle axial extension of the mould.

It is to be pointed out that the described device is adapted to be applied in a plant for the glass container production belonging to a single, double and triple gob of traditional conception (i.e. which could be provided with external cooling conducts device, or internal cooling unidirectional conducts device).

Now the advantages of the described device with regard to two processes are worth to be pointed out:
- at first, the machining process of blank and blow traditional moulds (both the externally cooled moulds - because lacking in internal cooling conducts - and the moulds, which are provided with unidirectional cooling conducts) in order to modify them and to fit them to the new production technology, which provides the internal bidirectional cooling process through internal conducts;
- second, the fitness process of said cooling device in different moulds for changing the production from one glass container to another.

As for the first process, it is possible to change from an externally cooled mould to a mould cooled with internal cooling conducts, thanks to the following machinings:
1) turning process for the elimination of any finnings in the area, where compressed air chambers are leaning;
2) milling process in the turned area in order to machine the annular recess 17;
3) drilling process for machining the cooling conducts.

As for the second process, the following operation is necessary:
1) milling process of the area, where the compressed air chamber is contacting the mould, as long as the internal conducts are reached.

At last, to change from the production of one glass container to the production of another container, which presents a different shape and a different axial size, it is necessary:
1) to loosen the screws 6b of the two side elements 6, in order to disengage the tubular element 4 from the block 5; such an operation allows a height fitness, with respect of the new mould 1, the so-called "cage" of Fig.3;
2) to change the spacers 34,38 so that the compressed air chamber 9,10 could present its recess 16 in front of the annular recess 17;
3) to lock the screws 6b of the blocks 5.

## Claims

1. Mould cooling system for a mould (1) in a glass container making machine, said mould being a blank or blow mould, comprising a compressed air chamber (9, 10), fed through an air pipe (2, 3, 3a, 4, 5) with compressed air and fitting onto a semi-annular recess (17) in the outer surface of a mould halve of the mould (1) from which recess cooling air is fed into a plurality of internal axial cooling conducts (19, 21) extending from said recess (17) through the mould (1) at both sides of the recess (17), said recess (17) comprising an upper (21) and a lower (19) portion with respect to the axial extension of said mould (1), and said recess and said axial cooling conducts making part of the mould cooling system, **characterized by** height adjustment means (34, 38) for said compressed air chamber (9, 10) allowing axial adjustment of the position of the compressed air chamber with respect to the corresponding semi-annular recesses (17) of a plurality of different moulds (1), each of them being adapted to the production of a specific bottle, so that said air pressure chamber (9, 10) can cooperate with any of said plurality of moulds (1).

2. System according to claim 1, **characterized in that** it comprises two air pipes (2, 3, 3a, 4, 5), each of them feeding two shell halves representing said compressed air chambers (9, 10), each of the compressed air chambers comprising a recess (16) cooperating with said semi-annular recess (17) of the mould (1).

3. System according to claim 1 or 2, **characterized in that** the mould (1) is positively inserted and removably supported in a cage comprising said compressed air chamber (9, 10) and an upper (29) and a lower (31) hinged arm having an upper (28) and a lower (32) mould-holder insert, wherein said height adjusting means (34, 38) are provided for said compressed air chamber (9, 10).

4. Method of machining a mould adapted to be cooled by an external cooling system and therefore being provided with external cooling fins, to convert it into a mould having a plurality of internal axial cooling conducts and a semi-annular recess (17) in the outer surface of each mould halve of the mould (1) from which the axial cooling conducts (19, 21) extend through the mould halves at both sides of the recess (17), **characterized by** the following machining steps:
a. turning the outer surface of the mould (1) thereby removing the cooling fins in the area where the semi-annular recesses (17) are to be formed;
b. milling the turned area for creating the annular recess (17) in the mould (1);
c. drilling the axial cooling conducts (19, 21).

5. Method of machining a mould adapted to be cooled by an internal cooling system and therefore comprising internal axial cooling conducts, to convert it into a mould having a plurality of internal axial cooling conducts and a semi-annular recess (17) in the outer surface of each mould halve of the mould (1) from which the axial cooling conducts (19, 21) extend through the mould halves at both sides of the recess (17), **characterized in** milling the area of the mould (1) where the semi-annular recesses (17) are to be formed to a radial extent cutting into the internal cooling conducts (19, 21).

6. Method for adapting a mould cooling system according to claim 3 to a different type of glass containers, **characterized by** the following steps:
a. releasing the air pipe (4) from the mould supporting cage,
b. changing the height adjustment means (34, 38) such that the air chamber (9, 10) is positioned in front of the semi-annular recess (17) of the new mould (1) to be used for the manufacture of the different type of glass containers,
c. tighten the air pipe (4) to the mould supporting cage.

## Patentansprüche

1. Formkühlsystem für eine Form (1) in einer Maschine zur Herstellung von Glasbehältern, wobei die Form eine Vorform oder eine Blasform ist, umfassend eine Druckluftkammer (9, 10), die über ein Rohr (2, 3, 3a, 4, 5) mit Druckluft versorgt wird und auf eine halbringförmige Aussparung (17) in der Außenseite einer Formhälfte der Form (1) formschlüssig aufsetzbar ist, von welcher Aussparung Kühlluft in eine Mehrzahl innerer, axialer Kühlkanäle (19, 21) geleitet wird, die sich von dieser Aussparung (19) zu beiden Seiten der Aussparung (17) durch die Form (1) hindurch erstrecken, wobei die Aussparung (17) bezüglich der axialen Erstreckung der Form (1) einen oberen Bereich (21) und einen unteren Bereich (19) hat und die Aussparung sowie die axialen Kühlkanäle Teil der Formkühlvorrichtung sind, **gekennzeichnet durch** Höhenanpassungselemente (34, 38) für die Druckluftkammer (9, 10), die eine axiale Einstellung der Lage der Luftdruckkammer bezüglich der entsprechenden, halbringförmigen Aussparungen (17) einer Vielzahl unterschiedlicher Formen (1) erlauben, von denen jede für die Herstellung einer spezifischen Flasche ausgebildet sind, so daß die Druckluftkammer (9, 10) mit jeder beliebigen dieser Formen (1) zusammenwirken kann.

2. System nach Anspruch 1, **dadurch gekennzeichnet, daß** dieses zwei Rohre (2, 3, 3a, 4, 5) hat, von denen jedes zwei die Druckluftkammern (9, 10) bildende Gehäusehälften mit Luft versorgt, wobei jede Druckluftkammer eine Ausnehmung (16) hat, die mit der halbringförmigen Aussparung (17) der Form (1) zusammenwirkt.

3. System nach Anspruch 1 oder 2, **dadurch gekennzeichnet, daß** die Form (1) formschlüssig in einen Käfig eingesetzt und in diesem herausnehmbar gehalten ist, welcher Käfig die Druckluftkammer (9, 10), einen oberen Schwenkarm (29) und einen unteren Schwenkarm (31) mit einem oberen Formhaltereinsatz (28) bzw. einem unteren Formhaltereinsatz (32) aufweist, wobei die Höhenanpassungselemente (34, 38) der Druckluftkammer (9, 10) zugeordnet sind.

4. Verfahren zur Bearbeitung einer Form, die für die Kühlung durch ein äußeres Kühlsystem ausgelegt und daher mit äußeren Kühlrippen versehen ist, um durch die Bearbeitung die Form in eine Form zu überführen, die eine Vielzahl von inneren, axialen Kühlkanälen und eine halbringförmige Aussparung (17) in der Außenseite jeder Formhälfte der Form (1) hat, von der sich die axialen Kühlkanäle (19, 21) zu beiden Seiten der Aussparung (17) durch die Formhälften hindurch erstrecken, **gekennzeichnet durch** die folgenden Bearbeitungsschritte:
a) Drehbearbeitung der Außenseite der Form (1), wodurch die Kühlrippen in dem Bereich entfernt werden, in den die halbringförmigen Außsparungen (17) eingearbeitet werden sollen;
b) Fräsen des abgedrehten Bereiches zur Einarbeitung der ringförmigen Aussparung (17) in die Form (1);
c) Bohren der axialen Kühlkanäle (19, 21).

5. Verfahren zur Bearbeitung einer Form, die für die Kühlung durch ein inneres Kühlsystem ausgelegt ist und daher innere, axiale Kühlkanäle aufweist, um dadurch die Form in eine Form mit einer Vielzahl von inneren, axialen Kühlkanälen und mit einer halbringförmigen Aussparung (17) in der Außenfläche jeder Formhälfte der Form (1) zu überführen, von der sich die axialen Kühlkanäle (19, 21) zu beiden Seiten der Aussparung (17) durch die Formhälften hindurch erstrecken, **gekennzeichnet durch** Fräsbearbeitung des Bereiches der Form (1), in welchen die halbringförmigen Aussparungen (17) bis zu einer radialen Erstreckung eingearbeitet werden sollen, wozu die Aussparungen in die inneren Kühlkanäle (19, 21) eingeschnitten werden.

6. Verfahren zur Anpassung eines Formkühlsystems nach Anspruch 3 an unterschiedliche Typen von Glasbehältern, **gekennzeichnet durch** die folgenden Schritte:
a) Lösen der Luftrohre (4) von dem die Form haltenden Käfig,
b) Auswechseln der Höhenanpassungselemente (34, 38) in der Weise, daß die Druckluftkammer (9, 10) vor der halbringförmigen Aussparung (17) der neuen Form (1) angeordnet ist, welche für die Herstellung der unterschiedlichen Typen von Glasbehältern verwendet wird,
c) Befestigen des Rohres (1) an dem die Form tragenden Käfig.

## Revendications

1. Dispositif de refroidissement pour un moule (1) de machine pour la fabrication de récipients en verre, ledit moule étant un moule ébaucheur ou un moule de soufflage, comprenant une chambre d'air comprimé (9, 10), alimentée en air comprimé à travers une conduite d'air (2, 3, 3a, 4, 5), et s'ajustant sur un évidement semi-annulaire (17) au niveau d'une surface externe d'une coquille du moule (1), évidement à partir duquel l'air de refroidissement alimente une pluralité de conduits de refroidissement axiaux internes (19,21) s'étendant à partir de l'évidement (17) à travers le moule (1) des deux côtés de l'évidement (17), ledit évidement (17) comprenant une partie supérieure (21) et inférieure (19) vis-à-vis de l'extension axiale dudit moule (1), ledit évidement et lesdits conduits de refroidissement axiaux faisant partie du dispositif de refroidissement, **caractérisé par** des moyens d'ajustement de la hauteur (34,38) de ladite chambre d'air comprimé (9,10) permettant un ajustement axial de la position de la chambre d'air comprimé vis-à-vis des évidements semi-annulaires (17) correspondant d'une pluralité de moules (1) différents, chacun d'entre eux étant adapté à la production d'une bouteille particulière, afin que ladite chambre d'air sous pression (9,10) puisse coopérer avec un moule quelconque parmi la pluralité de moules (1).

2. Dispositif selon la revendication 1, **caractérisé en ce qu'**il comprend deux conduites d'air (2, 3, 3a, 4, 5), chacune d'entre elle alimentant deux coquilles représentant lesdites chambres d'air comprimé (9,10), chacune des chambres d'air comprimé comprenant un évidement (16) coopérant avec l'évidement semi-annulaire (17) du moule (1).

3. Dispositif selon la revendication 1 ou 2, **caractérisé en ce que** le moule (1) est solidairement inséré et maintenu de manière amovible dans une cage comprenant ladite chambre d'air comprimé (9,10) et un bras articulé supérieur (29) et inférieur (31) comportant des inserts de maintien de moules supérieurs (28) et inférieurs (32), lesdits moyens d'ajustement de la hauteur (34,38) étant prévus pour ladite chambre d'air comprimé (9,10).

4. Procédé d'usinage d'un moule apte à être refroidi par un dispositif de refroidissement externe et en conséquence étant pourvu d'ailettes de refroidissement externe, pour le convertir en un moule ayant une pluralité de conduits de refroidissement axiaux internes et un évidement semi-annulaire (17) au niveau de la surface externe de chacune des coquilles du moule (1) à partir duquel les conduits de refroidissement axiaux (19,21) s'étendent à travers les coquilles des deux côtés de l'évidement (17), **caractérisé par** les étapes d'usinage suivantes :
a) Tournage de la surface externe du moule (1) afin de retirer les ailettes de refroidissement à l'endroit où les évidements semi-annulaires (17) doivent être formés.
b) Fraisage de la partie tournée afin de créer l'évidement annulaire (17) dans le moule (1).
c) Perçage des conduits de refroidissement axiaux (19,21).

5. Procédé d'usinage d'un moule apte à être refroidi par un dispositif de refroidissement interne et en conséquence comprenant des conduits de refroidissement axiaux internes, pour le convertir en un moule ayant une pluralité de conduits de refroidissement axiaux internes et un évidement semi-annulaire (17) au niveau de la surface externe de chacune des coquilles du moule (1) à partir duquel les conduits de refroidissement axiaux (19,21) s'étendent à travers les coquilles de chaque côté de l'évidement (17), **caractérisé par** le fraisage de la zone du moule (1) où les évidements semi-annulaires doivent être formés de manière radiale en coupant dans les conduits de refroidissement internes (19,21).

6. Procédé d'adaptation d'un dispositif de refroidissement pour moule selon la revendication 3 à différents types de récipients en verre, **caractérisé par** les étapes suivantes :
a) retirer la conduite d'air (4) de la cage de support de moule,
b) modifier les moyens d'ajustement de la hauteur (34,38) de manière à ce que la chambre d'air (9,10) soit positionnée face à l'évidement semi-annulaire (17) du nouveau moule (1) qui doit être utilisé pour la fabrication d'un récipient en verre d'un type différent,
c) solidariser la conduite d'air à la cage de support de moule.
